# EUROPEAN PATENT APPLICATION

(11) **EP 2 471 618 A1**
(43) Date of publication of application: **04.07.2012**
(21) Application number: 10197157.0
(22) Date of filing: 28.12.2010
(51) Int. Cl.: B23C 5/22, B23G 5/18

(54) **Milling cutter with a pocket at the front face and insert therefore**

(71) Applicant: VARGUS Ltd., 22311 Nahariya (IL)
(72) Inventor: Morgulis, Rafael, 21940, Carmiel (IL)
(74) Representative: Baumann, Jörg

(57) **Abstract**

The invention relates to a milling cutter comprising a holder (2) and an insert (3), the insert (3) being provided with a plurality of peripherally spaced cutting edges (34, 35, 36) concentrically arranged with respect to the central axis of the milling cutter (1) and with at least one outside surface (32, 33) arranged between two cutting edges (34, 35, 36), and the holder (2) being provided with a pocket (22) at its front face for receiving the insert (3), the pocket (22) having at least one inside surface (25, 26) that contacts the at least one outside surface (32, 33) of the insert (3) received, wherein the cutting edges (34, 25, 36) of the insert (3) received protrude from the pocket (22), the at least one inside surface (25, 26) of the pocket (22) is convexly curved towards the center axis of the milling cutter (1) and the at least one corresponding outside surface (32, 33) of the insert (3) is concavely curved towards the center axis of the insert (3). The invention further relates to an insert for a milling cutter.

## Description

The invention relates to a milling cutter comprising a holder and an insert, the insert being provided with a plurality of peripherally spaced cutting edges concentrically arranged with respect to the central axis, and the holder being provided with a pocket at the front face thereof for receiving the insert, wherein the cutting edges from the insert received in the pocket protrude from the pocket. The invention further relates to an insert for a milling cutter.

US 4,461,602 discloses a milling cutter comprising a holder and an insert or cutter plate, wherein the cutter plate is provided with a central bore and with a plurality of peripherally spaced teeth concentrically arranged with respect to the bore. The milling cutter further comprises a screw or a screw bolt extending through said central bore in said cutter plate and into a tap hole coaxially arranged in the front end of the holder for detachably fastening the cutter plate at the front face of the shaft. The shaft is provided with a recess at the front face thereof, wherein the periphery of the recess is defined by three planar inside surfaces coinciding with the sides of an equilateral triangle symmetrically arranged with respect to the central bore, and a gap is provided between each pair of adjacent planar inside surfaces on the shaft front end diameter. The cutter plate is provided with three planar outside surfaces, coinciding with the sides of said equilateral triangle, one tooth formed between extensions of each pair of planar outside surfaces of the cutter plate. The cutter plate is fitted in the recess such that each one of said three outside surfaces of the cutter plate contacts one of said three inside surfaces of the recess thereby completely filling up the recess and only the teeth are protruding outwards through said gaps.

It is one object of the invention to provide a milling cutter to produce threads and grooves having a small diameter having a high rigidity.

A further object of the invention is to provide an insert to be fixed to a milling cutter, which provides for a stable connection of the insert on the holder even in the case of small diameter milling cutters.

Other objects and advantages will become apparent from the following description and the drawings.

According to a first aspect of the invention, a milling cutter comprising a holder and an insert is provided, the insert having a plurality of peripherally spaced cutting edges concentrically arranged with respect to the central axis of the milling cutter and at least one outside surface arranged between two cutting edges, and the holder having a pocket at its front face for receiving the insert, the pocket having at least one inside surface that contacts the at least one outside surface of the insert received, wherein the cutting edges of the insert received protrude radially from the pocket and the at least one inside surface of the pocket is convexly curved towards the center axis of the milling cutter and the at least one corresponding outside surface of the insert is concavely curved towards the center axis of the insert.

According to a second aspect of the invention, an Insert for a milling cutter is provided, the insert being provided with a plurality of peripherally spaced cutting edges concentrically arranged with respect to its central axis and with at least one outside surface arranged between two cutting edges, wherein the at least one outside surface of the insert is concavely curved towards its center axis.

The insert is provided with an essentially flat bottom that abuts an essentially flat base arranged essentially parallel to the front face of the holder. The insert is received non-rotatably in the pocket. Due to the convexly curved inside surface, the thickness of a corresponding side wall of a pocket is increased without increasing the overall diameter of the cutter. Therefore, the side wall is stronger compared to side walls with flat inside surfaces. In addition, the curved surfaces allow an accurate positioning.

In preferred embodiments, the cutting edges are provided on respective cutting teeth, wherein at least one cutting tooth is supported by a side wall of the pocket arranged downstream of the cutting edge in rotational direction, the convexly curved inside surface being a part of the side wall. Thereby, a torque of a cutting force is transferred to the side wall. According to another embodiment, the at least one side wall is provided with a protrusion extending radially outward, wherein the shape of the protrusion corresponds to the shape of the respective tooth. The protrusion strengthens the support of the cutting tooth.

In accordance with an embodiment of the cutter, the at least one inside surface of the pocket and the at least one corresponding outside surface of the insert each are curved with an essentially circular curvature. The circular curvature allows for a cost-efficient production.

In a preferred embodiment, the radius of the curvature of the at least one inside surface of the pocket is larger than the radius of the curvature of the at least one corresponding outside surface of the insert. In addition or as an alternative, the center of the circular curvature of the at least one inside surface of the pocket is offset to the center off the circular curvature of the at least one corresponding outside surface. Thereby it is achieved that the surfaces do not contact each other over the entire area, but rather a contact area is provided at specific portions of the surfaces. In preferred embodiments, an offset and/or a diameter difference are chosen for allowing a contact area at the end of the surfaces seen in the rotational direction.

The cutting insert is provided with at least two cutting edges, wherein at least one of the surfaces between two adjacent cutting edges is used for an accurate positioning of the insert in the pocket. According to preferred embodiment, the insert has an essentially triangular shape with three cutting edges. In particular, the cutting edges preferably span an essentially equilateral triangle. The triangular shape is advantageous for providing a non-rotatable connection of the insert and the pocket and balancing cutting forces.

In one embodiment, the insert essentially triangular in shape is provided with three curved outside surfaces, wherein the insert is indexable with respect to the holder. In another embodiment, the insert is provided with only one curved outside surface. In accordance with a preferred embodiment, the insert is provided with two outside surfaces which are concavely curved towards the center axis of the insert and one essentially flat outside surface. Thereby an insert is provided which is positioned on a holder in a repeatable and reproducible manner.

According to another embodiment, the pocket has an essentially triangular base, wherein two inside surfaces are provided at two sides of the triangle and an opening is provided at the third side of the triangle. In preferred embodiments, both inside surfaces are formed as curved inside surfaces contacting respective outside surfaces of the insert, wherein the third outside surface of the insert is flat and not in contact with a inside surface of the pocket. In other embodiments, a flat and a curved inside surface are provided for contacting respective outside surfaces of the pocket.

The insert is located in the pocket using the surfaces. In one embodiment, magnets are provided for fixing the insert in the pocket. In preferred embodiments, the pocket and the insert are provided with a central tap hole and a corresponding central hole, respectively, the milling cutter further comprising a clamping element extending through said central hole for detachably fastening the insert at the front face of the holder. A central clamping element allows the attachment in axial direction, wherein the pocket guarantees for a non-rotatable fixation.

In a preferred embodiment, the clamping element is a screw having a head, a threaded part and a directing part arranged between the head and the threaded part. The directing part is designed to be oriented by a respective directing area of the tap hole provided in the pocket. The directing part is unthreaded. Therefore, the clamping screw may also be referred to as clamping bolt. Due to the directing part, the rigidity of the system is further enhanced.

In the following, an embodiment of the invention will be described in detail with reference to the drawings. Throughout the drawings, the same elements will be denoted by the same reference numerals.
- FIG. 1: is a perspective view of an embodiment of a proposed milling cutter;
- FIG. 2: is an exploded perspective view of the milling cutter according to FIG. 1;
- FIG. 3: is a face view of the milling cutter according to FIG. 1;
- FIG. 4: is a top view of the milling cutter according to FIG. 1;
- FIG. 5: is a sectional view of the milling cutter along V-V of FIG. 3;
- FIG. 6: is a perspective view of a threading insert.
- FIG. 7: is a perspective view of a grooving insert.

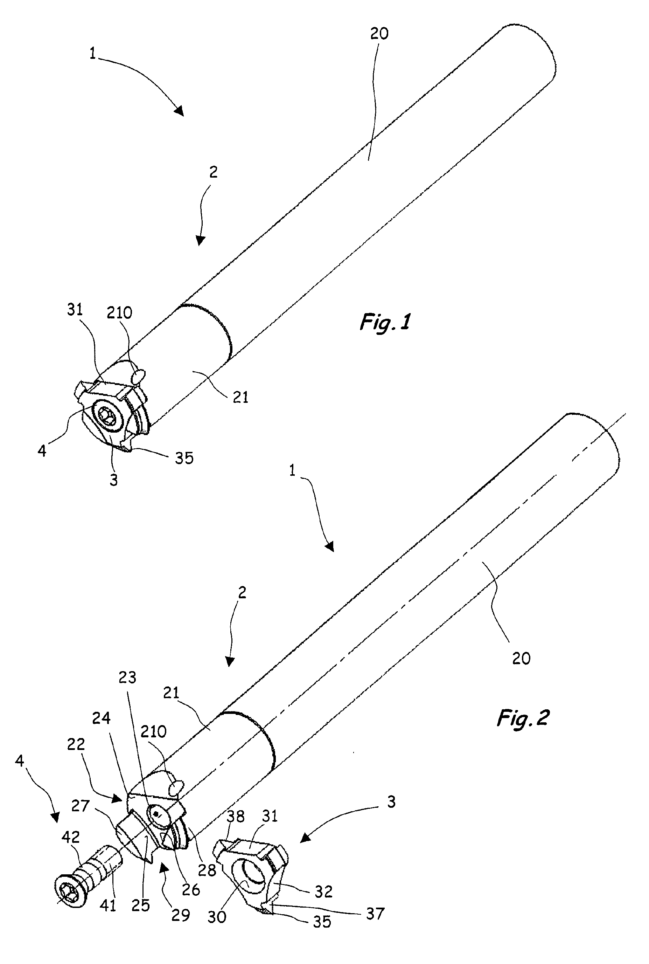

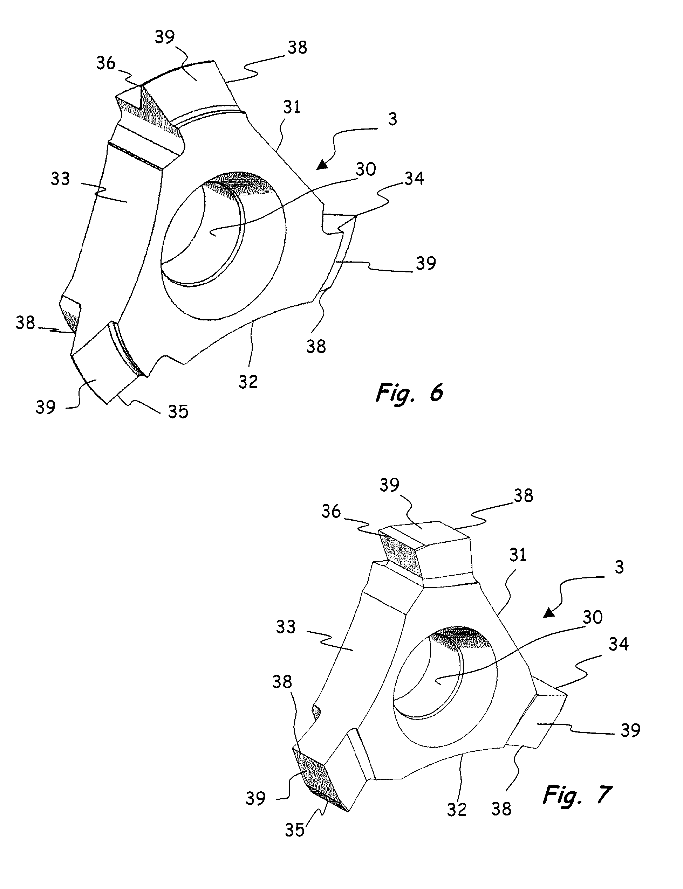

Fig. 1 to 5 show a milling cutter 1 comprising a holder 2 with a shank 20 and a forward protrusion 21, an insert 3 and a clamping screw 4. The insert 3 is shown in detail in Fig. 6. The insert 3 of figs. 1 to 6 is designed as a threading insert. Fig. 7 shows a grooving insert 3, wherein the same reference numbers are used for the same or similar elements.

On a front face of the holder 2, more particular, on a front face of the forward protrusion 21, a pocket 22 is provided into which the insert 3 is fitted. The insert 3 is provided with a central hole 30 and the holder 2 is provided with a central tap hole 23. The clamping screw 4 extends through the central hole 30 for detachably fastening the insert 3 in the pocket 22.

The insert 3 of the depicted embodiments are each provided with three outside surfaces 31, 32, 33 and three cutting edges 34, 35, 36, wherein imaginary connecting lines of the tips of the cutting edges 34, 35, 36 (not shown) form the sides of an equilateral triangle the center of which coincides with the axis of the central hole 30. A diameter of a thread or groove milled with the milling cutter 1 is defined by the diameter of a circle on which the tips of the three cutting edges 34, 35, 36 are arranged.

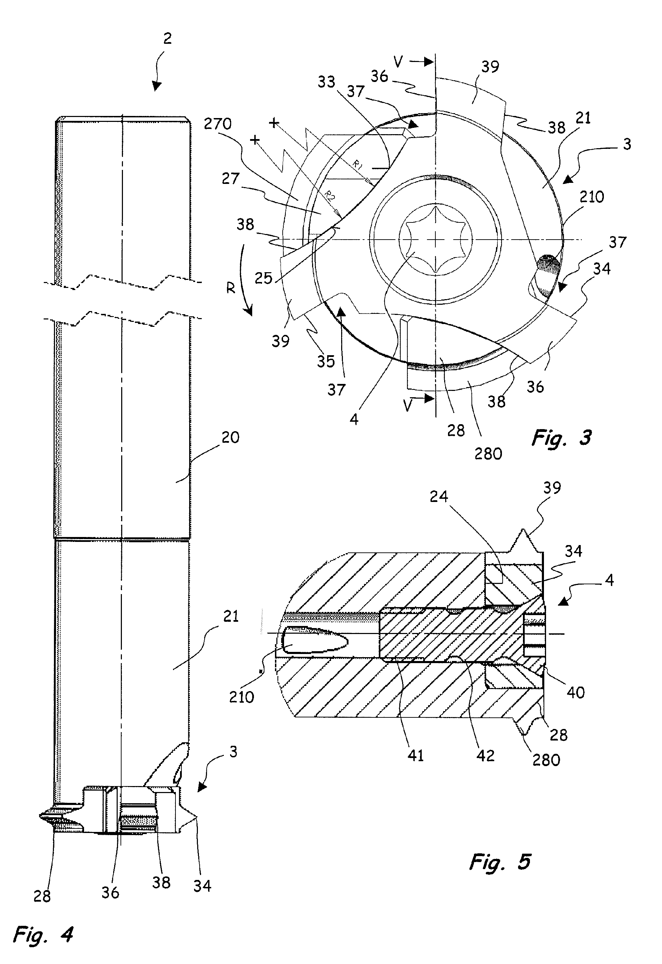

As can be best seen in Fig. 3, a concave cutting surface 37 adjoins each outside surface 31, 32, 33, downstream in a rotational direction R (indicated in Fig. 3). The cutting edges 34, 35, 36 are formed at the outer end of the cutting surfaces 37. The other end of each outside surface 31, 32, 33 extends beyond the outer diameter of the forward protrusion 21 and ends at trailing edges 38. The tips of the trailing edges 38 lie slightly inside of the diameter of the tips of cutting edges 34, 35, 36. Between the edges 34, 35, 36 teeth 39 are formed. The teeth 39 of the threading insert 3 shown in figs. 1 to 6 having a triangular cross-section, whereas the teeth of the grooving insert 3 shown in fig. 7 have a rectangular cross-section.

In other words, the insert 3 has three teeth 39 extending outwards from the diameter of the forward protrusion 21 as best seen in fig. 3. Each tooth 39 has a front-side cutting edge 34, 35, 36 and a trailing edge 38 seen in rotational direction R.

The pocket 22 has a flat base 24 arranged essentially parallel to the front face and two inside surfaces 25, 26, arranged essentially perpendicular to the base 24. In use, a flat bottom of the insert 3 abuts the flat base 24 and two of the outside surfaces 32, 33 of the insert 3 abut the two inside surfaces 25, 26. The two inside surfaces 25, 26 of the pocket 22 and the corresponding outside surfaces 32, 33 of the insert 3 each are curved with an essentially circular curvature. The two inside surfaces 25, 26 of the pocket 22 are convexly curved towards the center axis of the cutter 1. The corresponding outside surfaces 32, 33 of the insert 3 are concavely curved towards the center axis of the insert 3. Due to the curvature of the two inside surfaces 25, 26, the support sections or side walls 27, 28 that remain at the front face of the forward protrusion 21 when forming the pocket 22 are increased in size without increasing the outside diameter of the forward protrusion 21. Therefore, the support sections or side walls 27, 28 are stronger or more rigid than support sections of pockets 22 having flat inside surfaces. In addition, in the depicted embodiment, the side walls 27, 28 are extended radially outward by a radial protrusion 270, 280. In the depicted embodiment, the cross-section of the radial protrusions 270, 280 each corresponds to the shape of the tooth 39 that is supported by the respective radial protrusion 270, 280.

In the depicted embodiment, the radii R1 of the curvatures of the inside surfaces 25, 26 of the pocket 22 are larger than the radii R2 of the curvatures of the outside surfaces 32, 33 of the insert 3 and the centers of the curvatures are offset as schematically indicated in fig. 3. With this, a two point contact between the inside surfaces 25, 26 and the respective outside surfaces 32, 33 is achieved. The difference in size of the two radii R1, R2 and the distance by which the centers are offset is in preferred embodiments chosen in such way that a contact between the pocket 22 and the insert 3 is achieved in end regions of the side surfaces 32, 33, 25, 26 pointing towards the respective cutting edge 35, 36.

In the depicted embodiment, the third outside surface 31 of the insert 3 is essentially flat and the pocket 22 is open on the side corresponding to the third outside surface 31. This allows a cooling fluid to be provided to the cutting area via a cooling channel 210.

In the depicted embodiment, the two inside surfaces 25, 26 differ in length. The length of the inside surface 26 contacting the outside surface 32 immediately following the flat outside surface 31 in the rotational direction R is shorter than the length of the third inside surface 25.

Between adjacent ends of the two inside surfaces 25, 26, a gap 29 is formed, wherein a tooth 39 of the insert 3 provided between the two curved outside surfaces 32, 33 protrudes thru the gap 29.

Due to the contact of the insert 3 with the two inside surfaces 25, 26, the insert 3 is positioned in a non-rotatable manner. The central tap hole 23 is provided with a threaded region and a smooth region. The central screw 4 is built with a head 40, a threaded part 41 and a directing part 42 arranged there between. The directing part 42 of the screw 4 is designed to be oriented by the smooth region of the tap hole 23 in the pocket 22. This design gives additional rigidity to the cutter 1.

## Claims

1. Milling cutter comprising a holder (2) and an insert (3), the insert (3) being provided with a plurality of peripherally spaced cutting edges (34, 35, 36) concentrically arranged with respect to the central axis of the milling cutter (1) and with at least one outside surface (32, 33) arranged between two cutting edges (34, 35, 36), and the holder (2) being provided with a pocket (22) at its front face for receiving the insert (3), the pocket (22) having at least one inside surface (25, 26) that contacts the at least one outside surface (32, 33) of the insert (3) received, wherein the cutting edges (34, 25, 36) of the insert (3) received protrude from the pocket (22), **characterized in that**
the at least one inside surface (25, 26) of the pocket (22) is convexly curved towards the center axis of the milling cutter (1) and the at least one corresponding outside surface (32, 33) of the insert (3) is concavely curved towards the center axis of the insert (3).

2. Milling cutter according to claim 1, **characterized in that** the plurality of cutting edges (34, 35, 36) are each provided on a cutting tooth (39), wherein at least one cutting tooth (39) is supported by a side wall (27, 28) of the pocket (22) arranged downstream of the respective cutting edge (34, 35) in rotational direction (R), the convexly curved inside surface (25, 26) being provided on the side wall (27, 28).

3. Milling cutter according to claim 2, **characterized in that** the side wall (27, 28) supporting a cutting tooth (39) is provided with a protrusion (270, 280) extending radially outward, wherein preferably a shape of the protrusion (270, 280) corresponds to a shape of the respective tooth (39).

4. Milling cutter according to claim 1, 2 or 3, **characterized in that** the at least one inside surface (25, 26) of the pocket (22) and the at least one corresponding outside surface (32, 33) of the insert (3) each are curved with an essentially circular curvature.

5. Milling cutter according to claim 4, **characterized in that** the radius (R1) of the curvature of the at least one inside surface (25, 26) of the pocket (22) is larger than the radius (R2) of the curvature of the at least one corresponding outside surface (32, 33) of the insert (3).

6. Milling cutter according to claim 4 or 5, **characterized in that** the center of the circular curvature of the at least one inside surface (25, 26) of the pocket (22) is offset to the center off the circular curvature of the at least one corresponding outside surface (32, 33).

7. Milling cutter according to any of claims 1 to 6, **characterized in that** the insert (3) has an essentially triangular shape.

8. Milling cutter according to claim 7, **characterized in that** the insert (3) is provided with two outside surfaces (32, 33) which are concavely curved towards the center axis of the insert (3) and one essentially flat outside surface (31).

9. Milling cutter according to claim 7 or 8, **characterized in that** the pocket (22) has an essentially triangular base (24), wherein two inside surfaces (25, 26) are provided at two sides of the triangle and an opening is provided at the third side of the triangle.

10. Milling cutter according to any of claims 1 to 9, **characterized in that** the pocket (22) and the insert (3) are provided with a central tap hole (23) and a corresponding central hole (30), respectively, the milling cutter (1) further comprising a clamping element extending through said central hole (30) for detachably fastening the insert (3) at the front face of the holder (2).

11. Milling cutter according to claim 10, **characterized in that** the clamping element is a screw (4) having a head (40), a threaded part (41) and a directing part (42) arranged between the head (40) and the threaded part (41).

12. Insert for a milling cutter (1), the insert (3) being provided with a plurality of peripherally spaced cutting edges (34, 35, 36) concentrically arranged with respect to its central axis and with at least one outside surface (32, 33) arranged between two cutting edges (34, 35, 36), **characterized in that**
the at least one outside surface (32, 33) of the insert (3) is concavely curved towards its center axis.

13. Insert according to claim 12, **characterized in that** the at least one outside surface (32, 33) of the insert (3) each are curved with an essentially circular curvature.

14. Insert according to claim 12 or 13, **characterized in that** the insert (3) has an essentially triangular shape.

15. Insert according to claim 12, **characterized in that** the insert (3) is provided with two outside surfaces (32, 33) which are concavely curved towards the center axis of the insert (3) and one essentially flat outside surface (31).
